(19) Europäisches Patentamt / European Patent Office / Office européen des brevets

(11) **EP 1 932 863 B1**

## (12) EUROPEAN PATENT SPECIFICATION

(45) Date of publication and mention
of the grant of the patent:
**18.07.2018 Bulletin 2018/29**

(21) Application number: **07023222.8**

(22) Date of filing: **30.11.2007**

(51) Int Cl.:
*C08G 18/08* (2006.01)  *C08G 18/10* (2006.01)
*C08G 18/32* (2006.01)  *C08G 18/42* (2006.01)
*C08G 18/66* (2006.01)  *C08G 18/73* (2006.01)
*C08G 18/76* (2006.01)

(54) **Soft thermoplastic polyurethane elastomers and processes for their preparation and use**

Weiche thermoplastische Polyurethanelastomere und Verfahren zu ihrer Herstellung und Verwendung

Élastomères de polyuréthane thermoplastiques mous et leurs procédés de préparation et d'utilisation

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **11.12.2006 US 636838**

(43) Date of publication of application:
**18.06.2008 Bulletin 2008/25**

(73) Proprietor: **Covestro Deutschland AG**
**51373 Leverkusen (DE)**

(72) Inventors:
• **Bräuer, Wolfgang, Dr.**
  **51375 Leverkusen (DE)**

• **Peerlings, Henricus, Dr.**
  **42699 Solingen (DE)**
• **Lawrey, Bruce**
  **PA 15108 Moon Township (US)**
• **Gracik, Charles S.**
  **WV 26040 McMechen (US)**

(74) Representative: **Levpat**
**c/o Covestro AG**
**Gebäude 4825**
**51365 Leverkusen (DE)**

(56) References cited:
EP-A- 0 271 789    EP-A- 1 245 639
EP-A- 1 338 614    EP-A- 1 477 505
US-A- 5 688 890    US-A- 5 780 573

**Description**

**BACKGROUND OF THE INVENTION**

The present invention relates to soft thermoplastic polyurethane elastomer molding compositions which are readily released from a mold. These thermoplastic polyurethanes are characterized by a low degree of cold hardening, good mechanical properties and a hardness of 45 to 80 Shore A. This invention also relates to processes for the production and use of these thermoplastically processable polyurethane elastomers.

Thermoplastic polyurethane elastomers (TPU's) have been known for a long time. They are of industrial importance because of their high-quality mechanical properties and inexpensive, thermoplastic processability. A wide range of mechanical properties can be achieved by using various chemical builder components. An overview of TPU's, their properties and uses is given, e.g., in Kunststoffe 68 (1978), 819 or in Kautschuk, Gummi, Kunststoffe 35 (1982), 568.

TPU's are generally built up from linear polyols (usually polyester or polyether polyols), organic diisocyanates and short-chain diols (chain lengtheners or chain extenders). Catalysts can also be added to accelerate the formation reaction. To adjust the properties, the building components can be varied within relatively wide molar ratios. Molar ratios of polyol(s) to chain lengthener(s)/extender(s) of from 1:1 to 1:12 have been proven to be appropriate. Use of these ratios results in products characterized by a hardness in the range of from 80 Shore A to 75 Shore D.

The hardness of a TPU is largely determined by the ratio of hard segment (formed by reaction of the chain lengthener/extender with the isocyanate groups) to soft segment (formed by reaction of the polyol with the isocyanate groups). If the amount of hard segment is reduced below the point where an 80 Shore A TPU is produced, the resulting products are tacky, solidify poorly, exhibit poor releasability from the mold when injection molded and exhibit severe shrinkage. No economically acceptable injection molding cycle times are ensured with such TPUs.

In addition, an incipient soft segment crystallization at slightly below room temperature often leads to a significant increase in hardness. This increase in hardness which occurs over time or on exposure to sub-ambient temperatures deteriorates the usefulness and value of parts which had been designed for softness and flexibility.

Canadian Patent 1 257 946 teaches that use of specific phthalate and phosphate plasticizers produces TPU's with a hardness of 60 to 80 Shore A. However, these plasticized TPU's have disadvantageous characteristics such as bleeding of the plasticizer with after-hardening and odor problems. When these plasticized TPU's are in contact with rigid thermoplastics, stress cracking can occur.

U.S. Patent 6,218,479 describes soft polyurethane molding compositions of low shrinkage in the hardness range from 76 to 84 Shore A. These compositions are produced by mixing a 65-85 Shore A TPU ("TPU A") with a 76-90 Shore A TPU ("TPU B"). The harder TPU B is prepared by reacting the polyol with the diisocyanate in an NCO:OH ratio of from 2.0:1 to 5.0:1, so that the shrinkage of the mixture is reduced and a good dimensional accuracy is achieved. This process is limited in its effect at very low Shore A values in the range below 75 Shore A.

In U.S. Patent 6,538,075, a previously prepared TPU of 30 to 80 Shore D hardness is degraded in the first part of an extruder with the addition of low molecular weight diols to form large hard segment blocks. A new soft TPU is then produced in the second part of the extruder with the addition of isocyanate(s), polyol(s) and catalyst(s). These TPU's have good mechanical values and reduced abrasion. The preparation process described is very involved, and it is therefore very difficult to maintain the TPU properties in a controlled manner. In addition, the releasability of the TPU from the mold in injection molding processing is not particularly good.

U.S. 6,790,916 describes a three-step process for the preparation of TPU's having a hardness of 45 to 65 Shore A which are readily released from the mold. In the described process, ester-based TPU's prepared from an isocyanate-terminated prepolymer based on polyester polyols obtained by reacting a mixture of at least two different polyhydric alcohols with one or more dicarboxylic acids are produced. TPU's produced from isocyanate-terminated prepolymers based on mixtures of at least two polyester polyols are also described. The use of mixed esters or mixtures of polyols in such a three-step process is not preferred due to its complexity and cost. Further, the viscosities of such prepolymers are often quite high making it inherently more difficult to control the properties of the final TPU.

U.S. 5,780,573 is directed to TPU's based on polyester polyols with functionalities of from 2.01 to 2.08 hydroxyl groups per one molecule and crystallization enthalpies of 70 J/g or less. This disclosure teaches that polyester polyols with functionalities outside of the 2.01-2.08 range produce TPU's which are inferior and unsuitable for polyurethane fibers and molded articles.

**SUMMARY OF THE INVENTION**

It is an object of the present invention to provide very soft TPU's having hardness values of from about 45 to about 80 Shore A, which (1) are easy to release from a mold, (2) exhibit excellent mechanical properties and (3) which do not harden substantially after exposure to cold temperatures.

It is also an object of the present invention to provide a process for the production of very soft TPU's having hardness values of from about 45 to about 80 Shore A, which (1) are easy to release from a mold, (2) exhibit excellent mechanical properties and (3) which do not harden substantially after exposure to cold temperatures.

These and other objects which will be readily apparent to those skilled in the art are accomplished by producing the TPU with at least one polyester polyol which has been produced with at least one dihydric alcohol having no ether groups and an average of at least 0.40 side chain carbon atoms per ester group in the polyester polyol.

## DETAILED DESCRIPTION OF THE PREFERRED EMBODIMENTS OF THE INVENTION

The present invention provides thermoplastically processable polyurethane elastomers which are easy to release from the mold and have a hardness of up to 80 Shore A, preferably from 45 to 80 Shore A, more preferably from 50 to 75 Shore A, most preferably from 55 to 75 Shore A (as measured in accordance with DIN 53505). The TPU's of the present invention are also characterized by a tensile strength of greater than 10 MPa, preferably greater than 15 MPa, most preferably, greater than 20 MPa (as measured in accordance with ISO 37), and by their low degree of cold-hardening.

As used herein, "degree of cold hardening" means the relative difference between the hardness value of the TPU at ambient temperature (approximately 23°C) before exposure to a sub-ambie nt temperature ($HV_1$) and the hardness value of the TPU at ambient temperature after exposure to a temperature of 4°C for a period of five days ($HV_2$). This relative difference is calculated using the following equation:

$$HV_2 - HV_1 / HV_1 \times 100\%.$$

A relative difference of up to 6% indicates a low degree of cold hardening. A relative difference of greater than 10% indicates a high degree of cold hardening. The TPU's of the present invention are characterized by a relative difference of up to 6%, preferably, no more than 5%, most preferably, no more than 3%.

The thermoplastically processable polyurethane elastomers of the present invention may be produced by any of the processes known to those skilled in the art. However, one of the advantages of the present invention is the ability to produce TPU's with very good properties in a single-stage reaction.

In the single stage reaction, at least one branched hydroxyl-terminated polyester diol having a number-average molecular weight of from about 800 to about 5,000, which is the reaction of neopentyl glycol and adipic acid, is reacted with at least one organic diisocyanate and at least one diol chain lengthener or chain extender having a molecular weight of from about 60 to about 400, optionally, in the presence of a catalyst at an NCO:OH equivalents ratio based on all components employed, of from 0.9:1 to 1.1:1, preferably from 1.0 to 1.05:1.

The polyester diol required in the present invention must be branched. These polyester diols generally have number average molecular weights of from about 800 to about 5,000, preferably, from about 1000 to about 4000, most preferably, from about 1500 to about 4000.

While not wishing to be bound by any theory, it is believed that the role of the side chain carbon atoms is two-fold. First, they serve to disrupt interactions between the urethane ester groups. This allows for faster crystallization of the urethane hard segments and thus more rapid hardness build. Secondly, the side chain carbon atoms serve to limit soft segment crystallization, which is thought to be the main source of cold or after hardening.

The polyester diols have number-average molecular weights $\overline{M}_n$ of from about 800 to about 5,000, preferably, from 1000 to 4000 and can be used individually or in the form of mixtures with one another.

Organic diisocyanates suitable for use in the practice of the present invention include: aliphatic, cycloaliphatic, araliphatic, heterocyclic and aromatic diisocyanates, such as those described in, for example, Justus Liebigs Annalen der Chemie, 562, pages 75 to 136.

Examples of suitable diisocyanates include: aliphatic diisocyanates, such as hexamethylene-diisocyanate; cycloaliphatic diisocyanates, such as isophorone-diisocyanate, 1,4-cyclohexane-diisocyanate, 1-methyl-2,4-cyclohexane-diisocyanate and 1-methyl-2,6-cyclohexane-diisocyanate and the corresponding isomer mixtures, 4,4'-dicyclohexylmethane-diisocyanate, 2,4'-dicyclo-hexylmethane-diisocyanate and 2,2'-dicyclohexylmethane-diisocyanate and the corresponding isomer mixtures; aromatic diisocyanates, such as 2,4-toluene-diisocyanate, mixtures of 2,4-toluene-diisocyanate and 2,6-toluene-diisocyanate, 4,4'-diphenylmethane-diisocyanate, 2,4'-diphenylmethane-diisocyanate and 2,2'-diphenyl-methane-diisocyanate, mixtures of 2,4'-diphenylmethane-diisocyanate and 4,4'-diphenylmethane-diisocyanate, urethane-modified liquid 4,4'-diphenylmethane-diisocyanates, 2,4'-diphenylmethane-diisocyanates, 4,4'-diisocyanato-1,2-diphenylethane and 1,5-naphthylene-diisocyanate. 1,6-Hexamethylene-diisocyanate, 1,4-cyclohexane-diisocyanate, isophorone-diisocyanate, dicyclohexylmethane-diisocyanate, diphenylmethane-diisocyanate isomer mixtures with a 4,4'-diphenyl-methane diisocyanate content of more than 96 wt.%, 4,4'-diphenylmethane diisocyanate and 1,5-naphthylene-diisocyanate are preferably used. These diisocyanates may be used individually or in the form of mixtures with one another. They can also be used together with up to 15 mol% (calculated for the total diisocyanate) of a polyisocyanate, but polyisocyanate should be added at most in an amount such that a product which is still thermoplastically processable is formed. Triphenylmethane-4,4',4"-triisocyanate and polyphenyl-polymethylene polyisocyanates are examples of such suitable polyisocyanates.

Chain lengthening agents or chain extenders which are suitable for use in the practice of the present invention include diols, optionally mixed with small amounts of diamines, having a molecular weight of from about 60 to 400. Aliphatic diols having from 2 to 14 carbon atoms, such as 1,6-hexanediol, diethylene glycol, dipropylene glycol, and in particular ethylene glycol and 1,4-butanediol are particularly suitable. Diesters of terephthalic acid with glycols having 2 to 4 carbon atoms, e.g. terephthalic acid bis-ethylene glycol or terephthalic acid bis-1,4-butanediol; hydroxyalkylene ethers of hydroquinone, e.g. 1,4-di(β-hydroxyethyl)-hydroquinone; ethoxylated bisphenols, e.g. 1,4-di(β-hydroxyethyl)-bisphenol A; (cyclo)aliphatic diamines, such as isophoronediamine, ethylenediamine, 1,2-propylenediamine, 1,3-propylenediamine, N-methyl-propylene-1,3-diamine and N,N'-dimethylethylenediamine; and aromatic diamines, such as 2,4-toluenediamine, 2,6-toluenediamine, 3,5-diethyl-2,4-toluenediamine and 3,5-diethyl-2,6-toluenediamine and primary mono-, di-, tri- or tetraalkyl-substituted 4,4'-diaminodiphenylmethanes, are also suitable. Ethylene glycol, 1,4-butanediol, 1,6-hexanediol, 1,4-di(β-hydroxy-ethyl)-hydroquinone and 1,4-di(β-hydroxyethyl)-bisphenol A are most preferably used as chain lengtheners/extenders. Mixtures of the above-mentioned chain lengtheners/extenders can also be employed. In addition, relatively small amounts (i.e., less than about 0.5 equivalent% of all chain lengthener/extender molecules) of triols can be added.

Conventional monofunctional compounds such as chain terminators or mold release aids, can also be added in small amounts. Examples of suitable monofunctional compounds include alcohols such as octanol and stearyl alcohol, and amines, such as butylamine and stearylamine.

To prepare the TPU, the building components, optionally in the presence of catalysts, auxiliary substances and/or additives, can be reacted in amounts such that the equivalent ratio of NCO groups to the sum of the NCO-reactive groups, in particular the OH groups of the low molecular weight diols/triols and polyols, is from 0.9:1.0 to 1.1:1.0, preferably from 0.95:1.0 to 1.10:1.0.

Suitable catalysts for use in the practice of the present invention include any of the known tertiary amine catalysts such as triethylamine, dimethylcyclohexylamine, N-methylmorpholine, N,N'-dimethylpiperazine, 2-(dimethylaminoethoxy)ethanol, diazabicyclo[2,2,2]-octane and, in particular, organometallic compounds, such as titanic acid esters, iron compounds or tin compounds, such as tin diacetate, tin dioctoate, tin dilaurate and the tin-dialkyl salts of aliphatic carboxylic acids, such as dibutyltin diacetate and dibutyltin dilaurate. Preferred catalysts are organometallic compounds, in particular titanic acid esters and iron and tin compounds. The total amount of catalyst in the TPU is, in general from about 0 to about 5 wt.%, preferably from 0 to 1 wt.%, based on 100 wt.% of the TPU.

In addition to the TPU components and the catalysts, auxiliary substances and/or additives can also be added. Some examples which may be mentioned include lubricants, such as fatty acid esters, metal soaps thereof, fatty acid amides, fatty acid ester-amides and silicone compounds, antiblocking agents, inhibitors, stabilizers against hydrolysis, light, heat and discoloration, flameproofing agents, dyestuffs, pigments, inorganic and/or organic fillers and reinforcing agents. Reinforcing agents are, in particular, fibrous reinforcing substances, such as inorganic fibers, which are prepared according to the prior art and can also be charged with a size. Further details on the auxiliary substances and additives mentioned are to be found in the technical literature, for example the monograph of J.H. Saunders and K.C. Frisch "High Polymers", Volume XVI, Polyurethane, part 1 and 2, Verlag Interscience Publishers 1962 and 1964, the Taschenbuch für Kunststoff-Additive by R. Gächter and H. Müller (Hanser Verlag Munich 1990) or DE-A 29 01 774.

Other additives which may optionally be incorporated into the TPU include thermoplastics such as polycarbonates and acrylonitrile/butadiene/styrene terpolymers. Other elastomers, such as rubber, ethylene/vinyl acetate copolymers, styrene/butadiene copolymers and other TPU, can also be used. Commercially available plasticizers, such as phosphates, phthalates, adipates, sebacates and alkylsulfonic acid esters, may in principle be used but are not generally considered to be desirable.

The TPU of the present invention is adjusted to a Shore A hardness less than or equal to 80, preferably, from 45 to 80, more preferably, from 50 to 75 by adjusting the molar ratio of polyol to chain lengthener/extender.

The TPU's of the present invention may be prepared by any of the processes known to those skilled in the art. For example, the TPU may be prepared by the prepolymer process in which the polyester polyol and diisocyanate are first reacted at the beginning of the reaction and the chain extender is subsequently introduced into the reaction mixture to form the thermoplastic polyurethane. A more preferred process is the single stage reaction process (also known as the "one shot process") in which the polyester polyol, diisocyanate and chain extender simultaneously introduced and reacted.

The TPU of the present invention can be prepared either discontinuously or continuously. The best known industrial processes for the production of TPU's are the belt process (as described in, for example, GB-A 1 057 018) and the extruder process (as described in DE-A 1 964 834, DE-A 2 059 570 and U.S. Patent 5,795,948).

Any of the known mixing units, preferably those which operate with a high shear energy, are suitable for the preparation of the TPU according to the invention. Examples suitable mixing units for the continuous production of TPU's are co-kneaders, preferably extruders, such as e.g. twin-screw extruders, and Buss kneaders.

The TPU of the present invention may be prepared, for example, on a twin-screw extruder by addition of the diisocyanate, polyol, and chain lengthener/extender in parallel in the same metering opening of the extruder. The polyester polyol and chain lengthener/extender can also be premixed to form a single stream which is added to the extruder in parallel with the diisocyanate stream through the same opening. Optionally, the polyester polyol and diisocyanate can be added in the first part of the extruder with the chain lengthening/extending being added subsequently in the second part of the extruder. It is also possible to pre-react the diisocyanate and polyester polyol to form a prepolymer before introduction into the extruder (e.g., in a static mixer line) and then chain extend the prepolymer in the extruder.

The TPU's of the present invention are very soft (less than 80 Shore A) and have good mechanical properties. During processing by injection molding, the components solidify very rapidly and are therefore easily removed from the mold. The TPU's of the present invention still have very good elastic properties (i.e. no soft segment crystallization) even at low temperatures which manifests itself by a low increase in cold hardness after being subjected to sub-ambient temperatures as low as 4°C for several days.

The TPU's of the present invention are useful for the production of soft, flexible injection-molded components such as shoe soles, grip caps, sealing components and dust caps. In combination with other thermoplastics, products with a pleasant handle (hard-soft combination) are obtained.

Extruded articles, such as e.g. profiles and hoses, can also be produced from the TPU's of the present invention.

The invention is further illustrated but is not intended to be limited by the following examples in which all parts and percentages are by weight unless otherwise specified.

## EXAMPLES

The components employed in the preparation of the TPU, the relative molar amounts of those components, and the properties of the resultant TPU's are set forth in the following tables.

### EXAMPLES 1-14

**Preparation of the TPU:**

The polyester polyol produced from the alcohol and acid indicated in Table 1 (at 190ºC), the diisocyanate heated to 60ºC, and 1,4-butanediol were mixed intensively and after approx. 15 sec., the reaction mixture was poured on to a coated metal sheet and after-conditioned at 120ºC for 30 minutes. 4,4'-diphenylmethane-diisocyanate (MDI) was the isocyanate used in Examples 1-12 and 14. Hexamethylene diisocyanate (HDI) was used in Example 13. The diisocyanate, polyester polyol and butanediol were simultaneously introduced in Examples 1-13. In Example 14, the diisocyanate and polyester polyol were first reacted to form a prepolymer and the butanediol was subsequently added.

Table 1

| | Polyester Polyol | | | | | | |
|---|---|---|---|---|---|---|---|
| Example | Dihydric Alcohol Component | Dicarboxylic Acid Component | # side chain carbon atoms/# ester groups | Molecular Weight | Chain Extender | Moles Chain Extender / Mole Polyol | Moles of MDI/Mole Polyol |
| 1 | NPG | Ad | 1.11 | 2000 | HQEE | 0.63 | 1.63 |
| 2 | NPG | Ad | 1.11 | 2000 | EG | 1.00 | 2.0 |
| 3 | NPG | Ad | 1.11 | 2000 | BDO | 1.01 | 2.01 |
| 4* | 2MPD | Ad | 0.55 | 2000 | BDO | 1.2 | 2.2 |
| 5* | DEG | Ad | 0.00 | 2000 | BDO | 1.2 | 2.2 |
| 6* | DPG | Ad | 1.13 | 2000 | BDO | 1.2 | 2.2 |
| 7* | PG | Ad | 0.55 | 2000 | BDO | 1.2 | 2.2 |
| 8* | 3MPD | Ad | 0.56 | 2000 | BDO | 1.2 | 2.2 |

(continued)

| | Polyester Polyol | | | | | | |
|---|---|---|---|---|---|---|---|
| Example | Dihydric Alcohol Component | Dicarboxylic Acid Component | # side chain carbon atoms/# ester groups | Molecular Weight | Chain Extender | Moles Chain Extender / Mole Polyol | Moles of MDI/Mole Polyol |
| 9* | HDO/NPG (60/40) | Ad | 0.44 | 2000 | BDO | 1.2 | 2.2 |
| 10 | NPG | Ad | 1.11 | 2000 | BDO | 1.2 | 2.2 |
| 11 | NPG | Ad | 1.11 | 2000 | EG | 1.2 | 2.2 |
| 12* | 3MPD | Ad | 0.53 | 4000 | BDO | 3.6 | 4.6 |
| 13** | NPG | Ad | 1.11 | 2000 | HQEE | 0.7 | 1.7 |
| 14*** | NPG | Ad | 1.11 | 2000 | EG | 0.66 | 1.66 |

*Comparative example not according to the invention
NPG = neopentyl glycol
2MPD = 2-methyl-1,3-propanediol
DEG = diethylene glycol
DPG = 1,2-dipropylene glycol
PG = propylene glycol
3MPD = 3-methyl-1,5-pentanediol
HDO/NPG = hexanediol/neopentyl glycol
Ad = adipic acid
HQEE = 1,4-di-(betahydroxyethyl)hydroquinone
BDO = 1,4-butanediol

The cast sheets were cut and granulated. The granules were melted in an injection molding machine D 60 (32-screw) from Mannesmann and shaped to bars (mold temperature: 40ºC; bar size: 80x10x4 mm). With the exception of Example 3, the injection time was 25 seconds and the cooling time was 25 seconds. In Example 3, the injection time was 50 seconds and the cooling time was 50 seconds.

**Measurements:**

The measurement of the hardness of the TPU's was carried out in accordance with DIN 53505, and the measurement in the tensile test in accordance with ISO 37.

To characterize the extent of cold hardening due to soft segment crystallization, the plaques were placed in a refrigerator at 4ºC for 5 days. After removal from the refrigerator and equilibration at room temperature, the hardness values were re-measured. The increase in hardness from that reported at room temperature is a measure of the material's resistance to cold hardening.

The solidification properties in the injection molding processing are characterized by hardness measurement on a standard test specimen (4 mm thick) directly on release from the mold (after 0 sec) and 60 sec after release from the mold (cycle time 25/25 sec). The higher these two initial values, the faster the TPU solidifies, the better the green strength and the sooner it can be released from the mold.

A very soft TPU was obtained directly in a simple manner, even without the addition of plasticizers, by the single-stage process according to the invention.

These TPU's have very good mechanical properties, are readily processable and, because of a rapid rate of solidification, release readily from the mold. Cold hardening did not occur.

Table 2

| Example | Hardness (normal/ refrigerator) | 100% Modulus, MPa | Tensile Strength, MPa | Elongation at Break, % | Hardness after 0 seconds (Shore A) | Hardness after 60 seconds (Shore A) |
|---|---|---|---|---|---|---|
| 1 | 57/57 | | 28.9 | 885 | 26 | 32 |
| 2 | 47/47 | 1.1 | 11.5 | 963 | 19 | 25 |
| 3 | 46/46 | 1.44 | 15.4 | 906 | 41** | 42** |
| 4* | 63/64 | 2.3 | 18.3 | 1154 | 17 | 20 |
| 5* | 60/61 | 2 | 10.5 | 1368 | 10 | 14 |
| 6* | 57/56 | 1.8 | 8.6 | 1327 | 14 | 15 |
| 7* | 57/58 | 2 | 13.7 | 1194 | 14 | 20 |
| 8* | 63/62 | 2.2 | 19.4 | 1097 | 13 | 18 |
| 9* | 54/54 | | 26.5 | 1073 | 22 | 24 |
| 10 | 55/54 | | 29.4 | 953 | 31 | 36 |
| 11 | 55/55 | 1.8 | 19.8 | 798 | 29 | 36 |
| 12* | 74/75 | 3.5 | 31.5 | 926 | 61 | 66 |
| 13** | 65/66 | 2,6 | 24,1 | 911 | 12 | 36 |
| 14*** | 64/65 | 4,3 | 21 | 573 | 18 | 31 |
| *Comparative example not according to the invention<br>** TPU produced using 50 second injection time and 50 second cooling time | | | | | | |

It can be seen from the data presented in Table 2 that polyester polyols based on dihydric alcohols containing ether groups did not produce TPU's having the advantageous processing and mechanical properties of the TPU's produced in accordance with the present invention. This is seen in Comparative Examples 5 and 6 where the adipates based on DEG and DPG both produced TPU's having inferior hardening kinetics.

## COMPARATIVE EXAMPLES A, B, C

A 2250 molecular weight polybutylene adipate polyester polyol was reacted with MDI and ethylene glycol using the same procedure that was used to produce the TPUs made in Examples 1-12. The resulting TPU's exhibited a high degree of cold hardening evident upon comparison of the hardness values reported in Table 3. Despite low levels of hard segment, use of these polyester polyols having less than about 0.4 side chain carbon atoms per ester group made manufacturing TPUs below about 75 to 80 Shore A without the use of a plasticizer quite difficult.

Table 3

| Polyol | 2250MW Polybutylene adipate | | |
|---|---|---|---|
| Chain Extender | Ethylene Glycol | | |
| NCO:OH | 1.00 | | |
| | | | |
| Comparative Example | **A** | **B** | **C** |
| | | | |
| Moles CX / Mole Polyol | 2.23 | 1.6 | 1.29 |
| # side chain carbon atoms/# ester groups | 0 | 0 | 0 |
| | | | |

(continued)

| Comparative Example | A | B | C |
|---|---|---|---|
| Hardness, Shore A | 76 | 67 | 69 |
| Hardness after 48 hours at 44°F (6.7°C), Shore A | 80 | 82 | 89 |
| | | | |
| Stress at 100% Elongation, MPa | 4.07 | 2.96 | 2.34 |
| Tensile Strength, MPa | 20.0 | 26.2 | 26.9 |
| Elongation at Break, % | 580 | 622 | 653 |
| CX = chain extender | | | |

**Claims**

1.  A thermoplastically processable polyurethane elastomer which is readily releasable from a mold having a Shore A hardness of up to 80 Shore A, a tensile strength of greater than 10 MPa, a low degree of cold hardening being defined by a relative difference between the hardness value of the TPU at ambient temperature (approximately 23°C) before exposure to a sub-ambient temperature (HV1) and the hardness value of the TPU at ambient temperature after exposure to a temperature of 4°C for a period of five days (HV2) of up to 6%, and which is the reaction product of:

    A) at least one branched hydroxyl-terminated polyester having a number average molecular weight of from 800 to 5,000, which is the reaction product of:
    neopentyl glycol and adipic acid
    with
    B) at least one diisocyanate and
    C) at least one diol chain extender having a molecular weight of from 60 to 400, formed in the absence of a plasticizer by reacting A), B) and C) at an NCO:OH molar ratio of from 0.9:1 to 1.1:1.

2.  The elastomer of Claim 1 having a hardness of from 45 to 75 Shore A.

3.  The elastomer of Claim 1 in which the NCO:OH molar ratio is approximately 1:1.

4.  The elastomer of Claim 1 in which the diisocyanate is selected from the group consisting of 4,4'-diphenylmethane-diisocyanate, isophorone-diisocyanate, 1,6-hexamethylene-diisocyanate, 1,5-naphthylene-diisocyanate, 4,4'-dicyclohexylmethane-diisocyanate and mixtures thereof.

5.  The elastomer of Claim 1 in which the diol chain extender is selected from the group consisting of ethylene glycol, 1,4-butanediol, 1,6-hexanediol, 1,4-di-(betahydroxyethyl)-hydroquinone, 1,4-di-(betahydroxyethyl)-bisphenol A and mixtures thereof.

6.  A process for the production of the elastomers of Claim 1 comprising reacting

    A) at least one branched hydroxyl-terminated polyester polyol having a number-average molecular weight of from 800 to 5,000, which is the reaction product of:
    neopentyl glycol and adipic acid,
    with
    B) at least one diisocyanate and
    C) at least one diol chain extender having a molecular weight of from 60 to 400, in the absence of a plasticizer at an NCO:OH molar ratio of from 0.9:1 to 1.1:1.

7.  The process of Claim 6 in which the organic diisocyanate is selected from the group consisting of 4,4'-diphenyl-

methane diisocyanate, isophorone diisocyanate, 1,6-hexamethylene diisocyanate, 1,5-naphthylene diisocyanate, 4,4'-dicyclohexylmethane diisocyanate, and mixtures thereof.

8. The process of Claim 6 in which the diol chain extender is selected from the group consisting of ethylene glycol, 1,4-butanediol, 1,6-hexanediol, 1,4-di-(betahydroxyethyl)hydroquinone, 1,4-di-(betahydroxyethyl)-bisphenol A.

9. The process of Claim 6 which is conducted in a single stage.

**Patentansprüche**

1. Thermoplastisch verarbeitbares Polyurethanelastomer, das leicht aus einer Form gelöst werden kann,
mit einer Shore-A-Härte von bis zu 80 Shore-A,
einer Zugfestigkeit von mehr als 10 MPa,
einem geringen Kalthärtungsgrad, der durch eine relative Differenz zwischen dem Härtewert des TPUs bei Umgebungstemperatur (ungefähr 23°C) vor dem Kontakt mit einer Sub-Umgebungstemperatur (HV1) und dem Härtewert des TPUs bei Umgebungstemperatur nach dem Kontakt mit einer Temperatur von 4°C für einen Zeitraum von 5 Tagen (HV2) von bis zu 6% definiert ist,
und bei dem es sich um das Reaktionsprodukt handelt von:

   A) mindestens einem verzweigten Hydroxyl-terminierten Polyester mit einem zahlengemittelten Molekulargewicht von 800 bis 5.000, bei dem es sich um das Reaktionsprodukt handelt von: Neopentylglykol und Adipinsäure mit
   B) mindestens einem Diisocyanat und
   C) mindestens einem Diolkettenverlängerer mit einem Molekulargewicht von 60 bis 400, der in Abwesenheit eines Weichmachers durch Reagieren von A), B) und C) bei einem NCO:OH-Molarverhältnis von 0,9:1 bis 1,1:1 gebildet wird.

2. Elastomer nach Anspruch 1 mit einer Härte von 45 bis 75 Shore-A.

3. Elastomer nach Anspruch 1, bei dem das NCO:OH-Molarverhältnis ungefähr 1:1 beträgt.

4. Elastomer nach Anspruch 1, bei dem das Diisocyanat aus der Gruppe bestehend aus 4,4'-Diphenylmethandiisocyanat, Isophorondiisocyanat, 1,6-Hexamethylendiisocyanat, 1,5-Naphthylendiisocyanat, 4,4'-Dicyclohexylmethandiisocyanat und Gemischen davon ausgewählt ist.

5. Elastomer nach Anspruch 1, bei dem der Diolkettenverlängerer aus der Gruppe bestehend aus Ethylenglykol, 1,4-Butandiol, 1,6-Hexandiol, 1,4-Di-(betahydroxyethyl)-hydrochinon, 1,4-Di-(betahydroxyethyl)-bisphenol A und Gemischen davon ausgewählt ist.

6. Verfahren zur Herstellung der Elastomere nach Anspruch 1, umfassend das Reagieren von

   A) mindestens einem verzweigten Hydroxyl-terminierten Polyesterpolyol mit einem zahlengemittelten Molekulargewicht von 800 bis 5.000, bei dem es sich um das Reaktionsprodukt handelt von: Neopentylglykol und Adipinsäure
   mit
   B) mindestens einem Diisocyanat und
   C) mindestens einem Diolkettenverlängerer mit einem Molekulargewicht von 60 bis 400, in Abwesenheit eines Weichmachers bei einem NCO:OH-Molarverhältnis von 0,9:1 bis 1,1:1.

7. Verfahren nach Anspruch 6, bei dem das organische Diisocyanat aus der Gruppe bestehend aus 4,4'-Diphenylmethandiisocyanat, Isophorondiisocyanat, 1,6-Hexamethylendiisocyanat, 1,5-Naphthylendiisocyanat, 4,4'-Dicyclohexylmethandiisocyanat und Gemischen davon ausgewählt ist.

8. Verfahren nach Anspruch 6, bei dem der Diolkettenverlängerer aus der Gruppe bestehend aus Ethylenglykol, 1,4-Butandiol, 1,6-Hexandiol, 1,4-Di(betahydroxyethyl)hydrochinon, 1,4-Di-(betahydroxyethyl)-bisphenol A ausgewählt ist.

**9.** Verfahren nach Anspruch 6, das in einer einzelnen Stufe durchgeführt wird.


**Revendications**

**1.** Élastomère de polyuréthane pouvant être traité de façon thermoplastique qui est aisément démoulable ayant une dureté Shore A allant jusqu'à 80 Shore A,
une résistance à la traction de plus de 10 MPa,
un faible degré de durcissement à froid étant défini par une différence relative entre la valeur de dureté du polyuréthane thermoplastique (TPU) à température ambiante (approximativement 23 °C) avant exposition à une température sub-ambiante (HV1) et la valeur de dureté du TPU à température ambiante après exposition à une température de 4 °C pendant une durée de cinq jours (HV2) allant jusqu'à 6 %,
et qui est le produit de réaction de :

A) au moins un polyester à terminaison hydroxyle ramifié ayant un poids moléculaire moyen en nombre de 800 à 5 000, qui est le produit de réaction de :
néopentylglycol et acide adipique
avec
B) au moins un diisocyanate et
C) au moins un extenseur de chaîne diol ayant un poids moléculaire de 60 à 400, formé en l'absence d'un plastifiant par réaction de A), B) et C) à un rapport molaire NCO:OH de 0,9:1 à 1,1:1.

**2.** Élastomère de la revendication 1 ayant une dureté de 45 à 75 Shore A.

**3.** Élastomère de la revendication 1 dans lequel le rapport molaire NCO:OH est approximativement 1:1.

**4.** Élastomère de la revendication 1 dans lequel le diisocyanate est choisi dans le groupe constitué des diisocyanate de 4,4'-diphénylméthane, diisocyanate d'isophorone, diisocyanate de 1,6-hexaméthylène, diisocyanate de 1,5-naphtylène, diisocyanate de 4,4'-dicyclohexylméthane et des mélanges de ceux-ci.

**5.** Élastomère de la revendication 1 dans lequel l'extenseur de chaîne diol est choisi dans le groupe constitué d'éthylène glycol, 1,4-butanediol, 1,6-hexanediol, 1,4-di-(bêta-hydroxyéthyl)-hydroquinone, 1,4-di-(bêta-hydroxyéthyl)-bisphénol A et des mélanges de ceux-ci.

**6.** Procédé de production des élastomères de la revendication 1 comprenant la réaction de

A) au moins un polyester polyol à terminaison hydroxyle ramifié ayant un poids moléculaire moyen en nombre de 800 à 5 000, qui est le produit de réaction de :
néopentylglycol et acide adipique,
avec
B) au moins un diisocyanate et
C) au moins un extenseur de chaîne diol ayant un poids moléculaire de 60 à 400, en l'absence d'un plastifiant à un rapport molaire NCO:OH de 0,9:1 à 1,1:1.

**7.** Procédé de la revendication 6 dans lequel le diisocyanate organique est choisi dans le groupe constitué des diisocyanate de 4,4'-diphénylméthane, diisocyanate d'isophorone, diisocyanate de 1,6-hexaméthylène, diisocyanate de 1,5-naphtylène, diisocyanate de 4,4'-dicyclohexylméthane et des mélanges de ceux-ci.

**8.** Procédé de la revendication 6 dans lequel l'extenseur de chaîne diol est choisi dans le groupe constitué d'éthylène glycol, 1,4-butanediol, 1,6-hexanediol, 1,4-di-(bêta-hydroxyéthyl)hydroquinone, 1,4-di-(bêta-hydroxyéthyl)-bisphénol A.

**9.** Procédé de la revendication 6 qui est conduit en une seule étape.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6218479 B
- US 6538075 B
- US 6790916 B
- US 5780573 A
- DE 2901774 A
- GB 1057018 A
- DE 1964834 A
- DE 2059570 A
- US 5795948 A

### Non-patent literature cited in the description

- *Kunststoffe,* 1978, vol. 68, 819
- *Kautschuk, Gummi, Kunststoffe,* 1982, vol. 35, 568
- *Justus Liebigs Annalen der Chemie,* vol. 562, 75-136
- High Polymers. **J.H. SAUNDERS ; K.C. FRISCH.** Polyurethane. Verlag Interscience Publishers, 1962, vol. XVI
- **R. GÄCHTER ; H. MÜLLER.** Kunststoff-Additive. Hanser Verlag Munich, 1990